(19) Europäisches Patentamt

European Patent Office

Office européen des brevets

(11) Numéro de publication: **0 266 257**
**A2**

## (12) DEMANDE DE BREVET EUROPEEN

(21) Numéro de dépôt: 87402306.2

(22) Date de dépôt: 16.10.87

(51) Int. Cl.⁴: **B 01 J 37/02**
// B01J32/00

(30) Priorité: 27.10.86 FR 8614888

(43) Date de publication de la demande:
04.05.88 Bulletin 88/18

(84) Etats contractants désignés:
AT BE CH DE ES FR GB IT LI LU NL SE

(71) Demandeur: RHONE-POULENC CHIMIE
25, quai Paul Doumer
F-92408 Courbevoie Cédex (FR)

(72) Inventeur: Chopin, Thierry
44, rue A. Poullain Résidence Clos du Lendit
F-93200 Saint Denis (FR)

Garreau, François
23, rue Borrégo
F-75020 Paris (FR)

Knipper, Magali
78, avenue Secrétan
F-75019 Paris (FR)

Nortier, Patrice
2, allée des Fauvettes
F-92230 Romainville (FR)

Schuppiser, Jean-Luc
12, allée d'Appolon-Gressy
F-77410 Claye Souilly (FR)

(74) Mandataire: Esson, Jean-Pierre et al
Rhône-Poulenc Interservices Service Brevets Chimie 25,
quai Paul Doumer
F-92408 Courbevoie Cedex (FR)

(54) Procédé de préparation d'un support de catalyseur mettant en oeuvre de la gomme xanthane et support obtenu.

(57) L'invention concerne la préparation d'un support de catalyseur.

Le procédé de l'invention est du type comprenant le dépôt d'une composition de revêtement sur un substrat monolithique et il est caractérisé en ce qu'on effectue la mise en contact du substrat et de la composition de revêtement en présence d'une biogomme ou d'une gomme.

EP 0 266 257 A2

**Description**

PROCEDE DE PREPARATION D'UN SUPPORT DE CATALYSEUR METTANT EN OEUVRE DE LA GOMME XANTHANE ET SUPPORT OBTENU

La présente invention concerne la préparation d'un support de catalyseur mettant en oeuvre une gomme, type gomme xanthane, le support ainsi obtenu et son application à diverses réactions.

Les catalyseurs formés d'un substrat revêtu d'une pellicule ou d'une couche d'oxydes réfractaires sur laquelle est déposée la phase catalytiquement active, sont utilisés dans de nombreuses réactions en phase gazeuse. Ainsi, la purification catalytique des gaz d'échappement des moteurs à combustion interne fonctionnant à l'essence et des moteurs diésel est-elle couramment réalisée à l'aide de catalyseurs comportant un substrat céramique ou métallique sous forme d'une structure inerte et rigide (monolithique) en nids d'abeille revêtu d'une pellicule ou couche d'oxydes tels que l'alumine sur laquelle est déposée la phase active.

La fabrication des supports monolithiques s'effectue généralement en déposant une ou plusieurs couches d'oxydes sur le substrat monolithique. Dans la demande de brevet français No 2.512.004 de la Société RHONE-POULENC INDUSTRIES, un tel procédé est décrit. Un suspension aqueuse est formée à partir d'un mélange de poudres d'alumines. Ce mélange est constitué d'une charge et d'un liant, ce dernier constituant l'essentiel de la partie dispersible du mélange.

Le substrat est immergé dans la suspension aqueuse puis égoutté, drainé, séché et finalement calciné.

Or les propriétés mécaniques et l'adhérence des couches ainsi déposées sur les substrats monolithiques sont un facteur de qualité important. Il est en effet connu que les catalyseurs monolithiques employés en postcombustion automobile notamment, subissent de fortes températures, des variations importantes de températures, et des vibrations mécaniques.

Ces contraintes thermiques et mécaniques peuvent entraîner un décollement des couches et donc une perte d'oxyde déposé ce qui bien entendu entraine à la longue une diminution d'efficacité du catalyseur.

Un premier objet de l'invention est donc un procédé permettant de renforcer l'adhérence des couches d'oxydes sur les substrats.

Un deuxième objet de l'invention est la mise au point d'un procédé le plus simple possible et modifiant au minimum les procédures de dépôt des oxydes sur les substrats.

Dans ce but, le procédé, selon l'invention, de préparation d'un support de catalyseur du type comprenant le dépôt d'une composition de revêtement sur un substrat monolithique est caractérisé en ce qu'on effectue la mise en contact du substrat et de la composition de revêtement en présence d'une biogomme ou d'une gomme.

Selon un mode particulier de réalisation de l'invention on utilise comme biogomme le produit obtenu par la fermentation d'un hydrate de carbone sous l'action des bactéries Xanthomonas.

On s'est aperçu en effet que d'une manière inattendue l'utilisation d'une biogomme ou d'une gomme entraînait une très nette amélioration de la qualité des enduits.

L'invention et d'autres détails et caractéristiques de celles-ci seront mieux compris à la lecture de la description et des exemples concrets mais non limitatifs qui vont suivre.

L'invention peut s'appliquer à tout type de substrats monolithiques notamment aux substrats métalliques et céramiques.

Les monolithes métalliques utilisés sont notamment ceux obtenus à partir d'alliages de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

Les monolithes en matière céramique utilisés sont notamment ceux comportant comme matière principale : la cordiérite, l'alumine, la mullite, la zircone, la zirconmullite, le titanate de baryum ou d'aluminium, la porcelaine, l'oxyde de thorium, l'oxyde de magnésium, la stéatite, les carbures de bore ou de silicium, le nitrure de silicium.

Ces substrats ont une structure cellulaire en nids d'abeilles pouvant être de forme hexagonale, tétragonale, triangulaire ou ondulée, qui doit permettre le passage de gaz dans les canaux ou conduits formés lors de leur fabrication par extrusion,laminage, etc..

Dans le cadre de l'invention, les substrats du type décrit ci-dessus sont recouverts d'une composition de revêtement. Cette composition peut être de tout type connu. Elle est en principe à base d'oxydes réfractaires.

Parmi ces oxydes réfractaires on peut citer les oxydes suivants : oxyde de magnésium, calcium, strontium, baryum, scandium, yttrium, les lanthanides, gallium, indium, thallium, silicium, titane, zirconium, hafnium, thorium, germanium, étain, plomb, vanadium, niobium, tantale, chrome, molybdène, tungstène, rhénium, fer, cobalt, nickel, cuivre, zinc, bismuth.

Selon un mode particulier de l'invention, on utilise une composition à base d'alumine.

Bien entendu, il est tout-à-fait possible de revêtir le substrat d'une ou plusieurs couches de compositions de revêtement. Par ailleurs, une même composition peut comprendre un mélange de plusieurs oxydes du type précité.

On peut mentionner aussi les oxydes mixtes à base des éléments cités ci-dessus tels que l'aluminate de magnésium, l'aluminate de lanthane, l'aluminate de baryum, les aluminates de nickel, de zinc, de cuivre.

Ces mélanges d'oxydes ou d'oxydes mixtes peuvent être obtenus soit par mélangeage physique, soit par imprégnation d'un sel sur un oxyde préalablement préparé, soit par coprécipitation à partir d'un mélange de sels.

Selon une variante de l'invention, on utilise une composition du type décrit dans la demande de brevet français No 2.512.004 déjà mentionnée plus haut et dont l'enseignement est inclu ici dans la présente description.

Selon cette variante, la composition· de revêtement comprenant de l'alumine est une composition aqueuse comportant un liant constituant essentiellement la partie dispersée et une charge constituant essentiellement la partie non dispersée de la composition.

Le liant d'alumine peut être choisi parmi le groupe comportant les suspensions ou dispersions aqueuses de boehmites fines ou ultra-fines, de pseudo-boehmites, de gels d'alumine amorphe, de gels d'hydroxyde d'aluminium ou d'hydrargillite ultra-fine.

Eventuellement le liant d'alumine peut être remplacé au moins partiellement par un sol de silice.

En ce qui concerne la charge celle-ci peut être choisie parmi le groupe comportant les composés hydratés d'alumine et les formes déshydratées ou partiellement déshydratées de ces composés et notamment parmi le groupe comportant l'hydrargillite, la bayerite, la boehmite, la pseudo-boehmite, les gels d'alumine amorphe ou essentiellement amorphe, les composés constitués d'alumine de transition qui comportent au moins une des phases prises dans le groupe constitué par rhô, chi, êta, gamma, kappa, thêta, delta, alpha.

Eventuellement la charge d'alumine peut être au moins partiellement remplacée par un oxyde choisi parmi le groupe d'oxydes réfractaires mentionnés plus hauts.

Selon la caractéristique essentielle de l'invention, le procédé de préparation des supports met en oeuvre une gomme ou une biogomme.

Comme gommes on pourra utiliser les gommes naturelles d'origine végétale ou animale.

A titre de biogommes on peut citer les biogommes appartenant à la classe des hétéropolysaccharides d'origine microbienne. Il s'agit en particulier de produits exocellulaires linéaires de poids moléculaire élevé, de préférence, supérieur à un million. Ils sont notamment obtenus par fermentation d'un hydrate de carbone sous l'action de bactéries du genre Xanthomonas ou Arthrobacter ou des champignons appartenant au genre Sclerotium.

Les espèces représentatives de bactéries ou de champignons, dont on peut se servir pour la fabrication de ces hétéropolysaccharides comprennent par exemple : le Xanthomonas Begoniae, le Xanthomonas Campestris, le Xanthomonas Carotea, le Xanthomonas Hederae, le Xanthomonas Incanae, le Xanthomonas Malvacearum, le Xanthomonas Papavericola, le Xanthomonas Phaseoli, le Xanthomonas Pisi, le Xanthomonas Vasculorum, le Xanthomonas Vesicatoria, le Xanthomonas Vitians, le Xanthomonas Pelargonii ; l'Arthrobacter Stabilis, l'Arthrobacter Viscosus ; le Sclerotium Glucanicum, le Sclerotium Rolfsii.

On désigne, plus particulièrement, par Gomme Xanthane le produit obtenu par fermentation d'un hydrate de carbone sous l'action des bactéries du genre Xanthomonas.

Les espèces qui sont particulièrement adaptées à ce type de fermentation comprennent le Xanthomonas Begoniae, le Xanthomonas Campestris, le Xanthomonas Incanae et le Xanthomonas Pisi.

La Gomme Xanthane est un hétéropolysaccharide de masse moléculaire supérieure à $10^6$. Elle contient du D-glucose, du D-mannose et du D-glucuronate dans les rapports molaires 2,8/2,0/2,0. Elle est partiellement acétylée avec environ 4,7 % de radicaux acétyle. Elle contient aussi environ 3 % de radicaux pyruvate fixés sur une seule chaîne latérale de maille de D-glucopyranosyle comme cétal.

Les compositions de revêtement et la gomme ou biogomme sont généralement utilisées sous forme de suspension. On peut partir d'une suspension de gomme ou biogomme dans laquelle on introduit les éléments constitutifs de la composition de revêtement.

Les caractéristiques de la suspension ainsi obtenue sont ajustées d'une manière connue en soi en y ajoutant éventuellement un acide et en réglant la teneur en oxyde de manière à obtenir un pH et une viscosité adéquats.

Généralement on utilise une suspension de gomme ou biogomme à une teneur d'au plus 0,5 % et de préférence d'au plus 0,25 % en poids par rapport à l'eau. Dans un tel cas, on n'a pas à modifier le procédé de préparation des supports.

On réalise la mise en contact du substrat avec la composition de revêtement et la gomme ou biogomme par tout moyen connu. Généralement on immerge le substrat dans la suspension de gomme ou biogomme et de composition de revêtement de façon à remplir tous les canaux de celui-ci. On peut également opérer par écoulement de la composition à travers les canaux du substrat. On opère ensuite un égouttage partiel puis un drainage des canaux du substrat, au moyen par exemple d'un courant d'air comprimé. On coagule par effet thermique ou chimique et on sèche si nécessaire. Une calcination du substrat revêtu peut être conduite à une température comprise entre 300°C et 1100°C par exemple, cette température étant adaptée en fonction de la surface spécifique que l'on désire obtenir pour le revêtement.

Afin d'augmenter l'épaisseur de la couche obtenue dans une opération de revêtement, on peut opérer une second revêtement puis un troisième, etc...

Les supports ainsi obtenus sont parfaitement adaptés au traitement des gaz d'échappement des moteurs à combustion interne, à l'hydrodésulfuration, l'hydrodemétallation, l'hydrodénitrification, la récupération du soufre à· partir de composés soufrés, la déshydratation, le reformage, le reformage à la vapeur, la déshydrohalogénation, l'hydrocraquage, l'hydrogénation, la déshydrogénation, la déshydrocyclisation d'hydrocarbures ou autres composés organiques, les réactions d'oxydation et de réduction.

Des exemples vont maintenant être donnés.

## EXEMPLE 1

Cet exemple décrit un test de choc thermique qui permet de mesurer les pertes de revêtement sur un échantillon de monolithe de dimensions données.

Dans un support monolithique enduit, un échantillon parallèlépipédique d'environ 32 × 45 × 45 mm est prélevé. Les faces de l'échantillon sont grattées afin d'enlever toutes les aspérités. L'échantillon est ensuite lavé à l'eau déminéralisée, soufflé à l'air comprimé puis séché 8 heures à 120°C. Après un deuxième soufflage, l'échantillon est calciné pendant 1 heure à 550°C, puis refroidi en dessicateur, dans une boîte à tare fermée. Le poids de l'échantillon avant test est obtenu après refroidissement.

L'échantillon est alors porté pendant 20 minutes à 600°C et immédiatement jeté dans 2 litres d'eau déminéralisée à température ambiante à sa sortie du four.

L'échantillon est alors soufflé à l'air comprimé, séché 8 heures à 120°C et calciné 1 heure à 550°C pour être refroidi en dessicateur dans une boite à tare fermée. Le poids de l'échantillon obtenu après refroidissement est le poids après test.

On obtient ainsi une perte de dépôt par choc thermique que l'on exprime en pourcent de dépôt perdu par rapport au poids de dépôt de départ.

## EXEMPLE 2 COMPARATIF

Un mélange des alumines SCS 149 P de RHONE-POULENC (utilisée en tant que charge) et DISPERAL 10/3 de CONDEA (utilisée en tant que liant) est réalisée dans les proportions massiques comptées en $Al_2O_3$ de 80/20 respectivement.

Le mélange est mis en dispersion aqueuse dans une solution d'acide acétique de façon à obtenir un extrait sec total de 28 % poids et une teneur de 2,5 % en poids d'acide acétique par rapport à l'extrait sec.

On soumet cette suspension à un broyage dans un broyeur NETZSCHE LME1 fonctionnant en continu au débit de 22,5 litres par heure. La viscosité apparente de la suspension ainsi obtenue est de 28 mPA.s, mesurée à un gradient de vitesse de 101 $s^{-1}$.

Selon le procédé de la demande de brevet français No2.512.004, on enduit un monolithe de cordiérite commercialisé par la Société CORNING GLASS de forme "Race Track" avec 400 ouvertures par pouce carré. On obtient ainsi un dépôt de 100 grammes/l, mais ce dépôt se décolle par plaque après calcination.

La mesure d'une perte d'alumine sur un tel échantillon, selon la procédure décrite dans l'exemple conduit à une valeur de 9,7 % en poids.

## EXEMPLE 3

Si le mélange de poudres de l'exemple 2 est dispersé dans une suspension aqueuse de gomme xanthane, (contenant 0,1 % en poids de gomme xanthane par rapport à l'eau), afin d'obtenir une teneur en extrait sec de 30 % en poids, on obtient une dispersion qui, broyée dans un broyeur NETZSCHE LME1 fonctionnant en continu au débit de 25 l\h, a une viscosité apparente de 51 mPa.s.

L'enduction d'un monolithe pratiquée dans les mêmes conditions que celles décrites dans l'exemple 2 conduit à un dépôt de 118 g/l.

Le test, décrit dans l'exemple 1, donne une valeur de perte de dépôt de 0,15 % poids.

## EXEMPLE 4

On reproduit une suspension de la même manière que dans les 2 exemples précédents mais cette fois la teneur en extrait sec est abaissée à 29 % poids, et 1,5 % d'acide acétique (%poids par rapport à l'extrait sec) est ajouté à la suspension. Celle-ci est broyée comme dans l'exemple 3. La viscosité apparente est alors de 43 mPa.s.

Avec cette suspension, l'enduction d'un monolithe pratiquée dans les mêmes conditions que celles décrites dans l'exemple 2 conduit à un dépôt de 107 g/l.

Le test décrit dans l'exemple 1 donne une valeur de perte de dépôt de 0,17 % poids.

Les exemples ci-dessus démontrent clairement que l'addition d'une gomme permet une très nette amélioration de la qualité des enduits.

Bien entendu, l'invention n'est nullement limitée aux modes de réalisation décrits qui n'ont été donnés qu'à titres d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Procédé de préparation d'un support de catalyseur, du type comprenant le dépôt d'une composition de revêtement sur un substrat monolithique caractérisé en ce qu'on effectue la mise en contact du substrat et de la composition de revêtement en présence d'une gomme ou d'une biogomme.

2. Procédé selon la revendication 1, caractérisé en ce qu'on effectue la mise en contact du substrat avec une suspension aqueuse comprenant la gomme ou la biogomme et la composition de revêtement.

3. Procédé selon la revendication 2, caractérisé en ce qu'on effectue la mise en contact par immersion du substrat dans la suspension aqueuse.

4. Procédé selon l'une quelconque des revendications 1 à 3, caractérisé en ce qu'on utilise comme biogomme le produit obtenu par fermentation d'un hydrate de carbone sous l'action des bactéries du genre Xanthomonas.

5. Procédé selon l'une quelconque des revendications précédentes, caractérisé en ce qu'on utilise une composition de revêtement comprenant de l'alumine.

6. Procédé selon la revendication 5 caractérisé en que la composition de revêtement comprenant de l'alumine comporte un liant constituent essentiellement la partie dispersée et une charge constituent essentiellement la partie non dispersée de la composition.

7. Support de catalyseur caractérisé en ce qu'il est obtenu par un procédé selon l'une quelconque des revendications précédentes.

8. Application des supports de catalyseur selon la revendication 7 au traitement des gaz d'échappement des moteurs à combustion interne, à l'hydrodésulfuration, l'hydrodémétallation, l'hydrodénitrification,la récupération du soufre à partir de composés soufrés, la déshydratation, le reformage, le reformage à la vapeur, la déshydrohalogénation, l'hydrocraquage, l'hydrogénation, la déshydrogénation, la déshydrocyclisation d'hydrocarbures ou autres composés organiques, les réactions d'oxydation et de réduction.